# FASCICULE DE BREVET EUROPEEN

(11) **EP 0 609 145 B1**
(45) Date de publication et mention de la délivrance du brevet: **25.06.1997**
(21) Numéro de dépôt: 94400167.6
(22) Date de dépôt: 26.01.1994
(51) Int. Cl.: F23K 5/04, F16K 15/18

(54) **Distributeur commande à deux positions et deux orifices combiné avec un clapet de décharge**
2/2-Wege-Ventil mit kombiniertem Entlastungsventil
2/2 way valve combined with a relief valve

(30) Priorité: 27.01.1993 FR 9301064
(43) Date de publication de la demande: 03.08.1994
(73) Titulaire: SUNTEC INDUSTRIES FRANCE (SA), 21603 Longvic (FR)
(72) Inventeur: Canillac, Henri, F-21100 Dijon (FR)
(74) Mandataire: Bruder, Michel

(56) Documents cités:
- CH-A- 424 056
- DE-B- 1 230 162
- DE-C- 3 814 530

## Description

La présente invention concerne un distributeur commandé à deux positions et deux orifices combiné avec un clapet de décharge. L'invention s'applique en particulier à la réalisation d'électrovannes de commande de brûleurs à combustible liquide, par pulvérisation directe de gouttelettes de liquide dans l'enceinte de combustion.

Un brûleur à pulvérisation se compose généralement d'une pompe plongeant dans un réservoir, par exemple de fioul, débouchant à son extrémité sur un tuyau pourvu successivement d'une électrovanne normalement fermée, d'un éventuel préchauffeur et, enfin, d'un gicleur. Tous ces éléments sont bien entendu reliés entre eux par le biais de raccords qui constituent autant de pièges à air ; comme par ailleurs les vitesses d'écoulement du combustible liquide sont très faibles, l'air qui s'accumule dans le tuyau d'alimentation du gicleur s'avère très difficile à éliminer. En fonctionnement, la pompe délivre une pression assez élevée d'environ 10 bars (soit 10⁶ Pa), ce qui signifie que les bulles d'air piégées dans le tuyau d'alimentation sont aussi soumises à cette pression. Au moment où l'on arrête un brûleur en cours de fonctionnement, il se produit par conséquent une détente des bulles de gaz qui provoque un dégouttement du gicleur ; comme, dans la chambre de combustion, la flamme est éteinte, le combustible s'échappant non pulvérisé du gicleur tombe imbrûlé sur la sole où il forme une suie polluante.

Un effet très similaire est dû à la présence du préchauffeur qui provoque, avant la mise en marche de la pompe, une dilatation de la colonne de combustible liquide située derrière ladite pompe.

Afin de remédier à ces inconvénients, on a déjà envisagé d'installer un distributeur commandé, tel qu'une électrovanne, ou un distributeur passif, tel qu'un clapet, au niveau du gicleur, de manière à interdire tout dégouttement de liquide dans la chambre de combustion. De ce fait, à la coupure du brûleur, une certaine quantité de liquide, d'air et de gaz sous pression se retrouve enfermée entre l'électrovanne de la pompe et le système de coupure passif ou commandé du gicleur ; s'il se produit alors une dilatation thermique, par exemple due à l'allumage du préchauffeur, l'augmentation de pression très importante qui peut en résulter va provoquer l'ouverture du système de coupure du gicleur, avec les mêmes conséquences que précédemment.

Une solution à ce dernier inconvénient consiste à agencer un circuit de type by-pass en dérivation sur l'électrovanne de la pompe susceptible de relâcher cette augmentation de pression avant que le système de coupure du gicleur ne s'ouvre.

La présente invention a trait à un perfectionnement relatif à cette deuxième technique, déjà décrite notamment dans les demandes de brevet DE-A-3 814 530 et DE-B-1.230.162 au nom de DANFOSS.

A cet effet, l'invention concerne un distributeur commandé à deux positions et deux orifices, tel qu'une électrovanne, disposé en série entre une pompe d'un brûleur à combustible liquide et un gicleur incorporant lui-même un système de coupure passif, tel qu'un clapet, de manière à interdire tout dégouttement de liquide dans la chambre de combustion dudit brûleur, ledit distributeur étant essentiellement constitué d'un équipage mobile, comportant un plongeur et un corps de soupape, sollicité par des moyens élastiques contre un siège fixe et comportant, en parallèle, un circuit de type by-pass réalisé au moyen d'un alésage traversant le corps de soupape et en communication directe avec l'orifice du siège du distributeur et d'un clapet de décharge, calibré pour s'ouvrir à une pression inférieure d'une part à la pression d'ouverture de l'électrovanne et, d'autre part à la pression d'ouverture du système de coupure du gicleur, ce distributeur étant caractérisé en ce que les mêmes moyens élastiques sont utilisés pour tarer, d'une part, le distributeur en position normale de fermeture et, d'autre part, le clapet de décharge incorporé à l'équipage mobile qui comporte essentiellement un corps de soupape agencé à l'intérieur d'une tige-guide ou plongeur.

Dans une variante préférentielle de l'invention, la surface supérieure normalement plane du corps de soupape, pourvu d'un alésage central, en communication directe avec l'orifice du siège du distributeur, sert directement de siège au clapet de décharge.

De plus, le double usage qui est fait des moyens élastiques, par exemple un ressort, pour tarer, d'une part, le distributeur en position normale de fermeture et, d'autre part, le clapet de décharge incorporé à l'équipage mobile du distributeur, en appui positif sur son corps de soupape, est particulièrement avantageux par rapport aux solutions préconisées dans les brevets DANFOSS mentionnés précédemment.

Bien entendu, la forme la plus courante de distributeur commandé que l'on emploiera est du type d'une électrovanne. C'est pourquoi on rappellera maintenant qu'une électrovanne comporte un siège en métal sur lequel repose un corps de soupape en un matériau élastomère ou analogue, qui est solidaire d'une tige-guide formant l'induit d'un électro-aimant susceptible de solliciter ladite tige-guide à l'encontre de la force de rappel d'un ressort qui maintient ledit corps de soupape sur ledit siège dans la position normale de fermeture de ladite électrovanne.

Les électrovannes actuellement utilisées pour la fabrication des brûleurs à pulvérisation ne sont pas dimensionnées pour que, si on essaye de les prendre à l'envers avec l'objectif de se servir du corps de soupape taré comme d'un clapet de décharge, elle s'ouvrent sous une pression nettement inférieure à la pression d'ouverture du système de coupure intégré au gicleur ; en effet, la réalisation de la fonction principale de ces électrovannes conduit à des dimensions telles qu'elles s'ouvrent à l'envers sous une contre-pression d'environ 7 bars ; cette pression est trop proche de la pression nominale de pulvérisation du gicleur, à savoir environ 10 bars, pour que le clapet qui est intégré audit gicleur fonctionne d'une manière convenable.

L'incorporation d'un clapet de décharge à l'équipage mobile du distributeur conforme à l'invention permet de s'affranchir de cet inconvénient d'une manière très simple, puisqu'elle ne nécessite pas, en particulier, de modifier substantiellement les électrovannes en service sur les brûleurs existant.

D'autres caractéristiques de la présente invention ressortiront mieux de la description qui va suivre de plusieurs modes de réalisation d'une électrovanne incorporant un clapet de décharge, ces modes d'exécution étant donnés à titre indicatif de l'invention en référence aux dessins annexés sur lesquels :
- la figure 1 est une représentation schématique d'un brûleur à pulvérisation de combustible liquide,
- la figure 2 est une vue en coupe longitudinale d'une électrovanne incorporant un clapet de décharge dans sa position d'ouverture, montrant le soulèvement du clapet de décharge sous l'effet d'une surpression de combustible liquide en aval de l'électrovanne,
- la figure 3 est une vue en coupe longitudinale d'une autre forme de réalisation de l'électrovanne montrée sur la figure 2, incorporant un système de palonnage à bille du clapet de décharge,
- la figure 4 est une vue en coupe longitudinale d'une autre forme de réalisation de l'électrovanne montrée sur la figure 2, incorporant encore un autre système de palonnage du clapet de décharge qui coopère avec un second ressort d'ajustage des conditions d'appui et d'étanchéité dudit clapet.

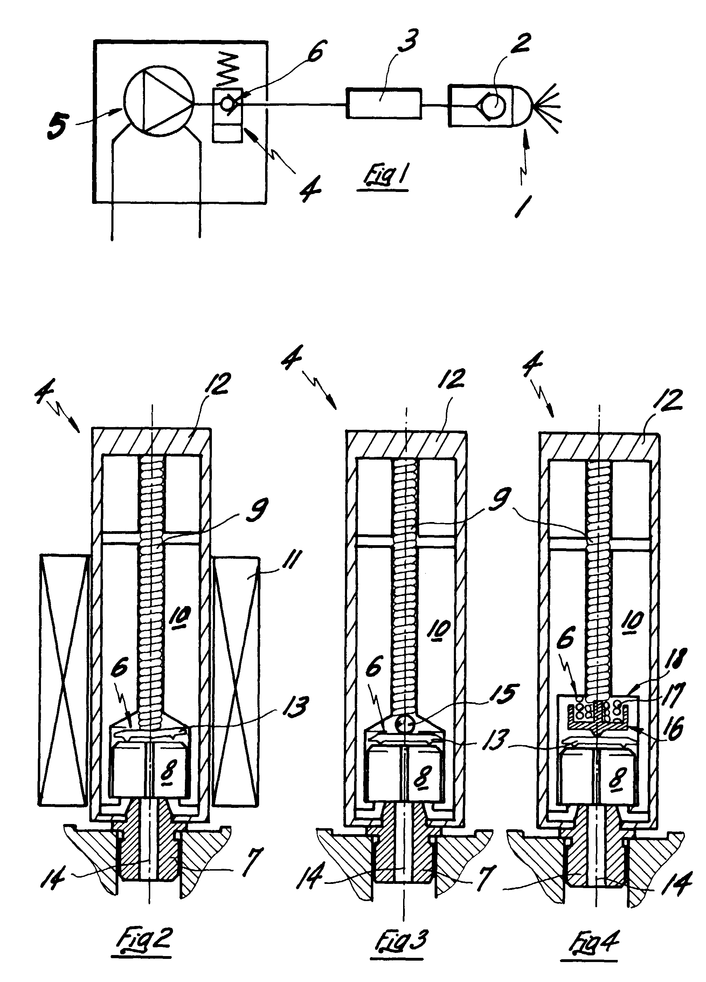

Le brûleur à pulvérisation de combustible liquide représenté schématiquement sur la figure 1 comporte, en série depuis l'aval vers l'amont dudit brûleur :
- un gicleur 1 chargé de pulvériser le liquide combustible sous forme de fines gouttelettes dans la chambre de combustion, non représentée sur les figures,
- un système de coupure, tel un premier clapet de décharge 2, qui est incorporé au gicleur 1, et dont l'ouverture s'effectue pour une pression supérieure à 5 bars environ ; ce clapet 2 évite le dégouttement du gicleur 1 dans les conditions décrites en préambule.
- un préchauffeur 3, dont le rôle principal est, par élévation thermique du combustible avant l'allumage du brûleur, de modifier la viscosité dudit combustible pour l'adapter au mieux aux conditions de la combustion par pulvérisation.
- une électrovanne 4 normalement fermée. Cette dernière, lorsqu'elle est de constitution classique, est susceptible de s'ouvrir sous l'effet d'une contre pression d'environ 6 à 8 bars.
- une pompe 5 plongeant dans un réservoir de combustible pour amener ce dernier sous pression jusqu'au gicleur 1 ; dans le cas du fioul domestique, la pression nomimale délivrée par la pompe 5 est de l'ordre de 10 bars.

Suivant la présente invention, l'électrovanne 4, telle que représentée sur la figure 2, incorpore un clapet de décharge 6, taré entre 1 et 4 bars par détermination adéquate de son diamètre. A cet effet, l'électrovanne 4 - qui est formée classiquement d'un siège 7 en métal sur lequel repose un corps de soupape 8 relativement épais en élastomère, sollicité contre ledit siège 7 par un ressort taré 9 monté coaxialement dans une tige-guide, ou plongeur 10, formant l'induit mobile d'une bobine d'excitation 11 qui est agencée autour du tube 12 de l'électrovanne 4 - comporte également un diaphragme 13 en forme d'assiette qui vient en appui positif contre la surface supérieure plane du corps de soupape 8 de manière à constituer le clapet de décharge 6 ; en position normale de fermeture, le diaphragme 13 obture un alésage traversant 14 en communication directe avec l'orifice du siège 7 de l'électrovanne 4 (demie vue gauche de la figure 2). Le diamètre de la rive d'appui du diaphragme 13 sur la face supérieure du corps de soupape 8 détermine, en combinaison avec la force développée par le ressort taré 9, la pression d'ouverture du clapet de décharge 6.

Par ailleurs, bien qu'il soit possible de disposer un second ressort taré coaxialement au plongeur 10 pour maintenir le diaphragme 13 dans sa position de fermeture (voir infra la réalisation qui sera décrite en référence à la figure 4), il est avantageux d'utiliser pour ce faire le ressort taré 9 pour, d'une part, maintenir le corps de soupape 8 contre le siège 7 et, d'autre part, réaliser l'étanchéité du diaphragme 13.

D'un autre côté, on observera que, pour des raisons de fiabilité évidentes, la réalisation du corps de soupape 8 ne doit pas être quelconque et, qu'en particulier, son épaisseur est en rapport direct avec les contraintes imposées par la non déformation du diaphragme 13 disposé en appui positif sur sa surface supérieure.

Le fonctionnement de l'électrovanne 4 ainsi constituée est le suivant :
- dès l'arrêt du brûleur, la pression tombe et le clapet d'anti-dégouttement 2 incorporé au gicleur 1 se ferme tandis que, simultanément, l'électrovanne 4 est amenée dans sa position de repos ; la colonne de combustible liquide est alors enfermée entre ces deux éléments. S'il se produit alors une élévation de température, due par exemple aux radiations du foyer de la chaudière, cette colonne de combustible se détend, ce qui provoque une surpression dont l'énergie est absorbée par le soulèvement du diaphragme 13 faisant office de clapet de décharge 6 à l'intérieur de l'électrovanne 4, les quelques gouttes de combustible s'échappant par la périphérie dudit diaphragme 13 retournant ainsi en direction de la pompe 5 (demie vue droite de la figure 2).
- de même, juste avant la remise en fonctionnement du brûleur, la mise en marche du préchauffeur 5 provoque la dilatation du combustible liquide qui, du fait de la surpression engendrée, peut à nouveau s'écouler par la périphérie du diaphragme 13.

On observera qu'étant donné que le diaphragme 13 est sollicité en permanence par le ressort taré 9, la force de fermeture du clapet de décharge 6 ne varie pas dans le temps ; par conséquent, la fiabilité dudit clapet est excellente même si, par ailleurs, le matériau constitutif du corps de soupape 8 est déformé par l'action chimique des éventuels composés aromatiques contenus dans le liquide combustible. A fortiori, la fiabilité du clapet proposé dans le cadre de la demande examinée est donc bien supérieure à celle des clapets décrits dans les brevets DANFOSS où la fonction élastique est assurée par des pièces (manchon ou joint torique) élastiques sensibles aux agressions chimiques.

Cette fiabilité, ainsi d'ailleurs que la précision du clapet, peuvent être encore améliorées par palonnage, c'est-à-dire en assurant une poussée du ressort taré 9 juste au centre du diaphragme 13 faisant office de clapet de décharge 6.

A cet effet, ainsi qu'il est représenté sur la variante de la figure 3, une bille calibrée 15 peut être insérée entre la base du ressort 9 et son appui sur le diaphragme 13.

Dans une autre variante représentée sur la figure 4, le palonnier 16 adopte une forme plus complexe due à l'ajout d'un second ressort 17, monté concentriquement autour du ressort taré 9 entre, d'une part, le diaphragme 13 et, d'autre part, un épaulement 18 aménagé à cet effet à la partie supérieure du logement du corps de soupape 8 et dudit diaphragme 13. Ce palonnier 16, de forme extérieure sensiblement cylindro-conique avec sa pointe reposant au centre du diaphragme 13, comporte un guide axial pour le ressort taré 9 et un rebord externe pour le maintien latéral du ressort externe 17.

Enfin, dans une variante simplifiée de ce dernier dispositif, non représentée sur les dessins, le second ressort 17 repose directement à la périphérie du diaphragme 13, un palonnier du type d'une bille 15 étant alors juste insérée sous la base du ressort principal 9.

## Revendications

1. Distributeur commandé à deux positions et deux orifices, tel qu'une électrovanne (4), ledit distributeur étant essentiellement constitué d'un équipage mobile (8,10), comportant un plongeur (10) et un corps de soupape (8), sollicité par des moyens élastiques (9) contre un siège (7) fixe et comportant, en parallèle, un circuit de type by-pass réalisé au moyen d'un alésage (14) traversant le corps de soupape (8) et en communication directe avec l'orifice du siège (7) du distributeur et d'un clapet de décharge (6), calibré pour s'ouvrir à une pression inférieure d'une part à la pression d'ouverture du distributeur (4) et, d'autre part à la pression d'ouverture d'un système de coupure d'un gicleur (1) alimenté par le distributeur, *caractérisé* en ce que les mêmes moyens élastiques (9) sont utilisés pour tarer, d'une part, le distributeur en position normale de fermeture et, d'autre part, le clapet de décharge (6) incorporé à l'équipage mobile (8,10) qui comporte essentiellement un corps de soupape (8) agencé à l'intérieur d'une tige-guide ou plongeur (10).

2. Distributeur selon la revendication précédente, *caractérisé* en ce que les moyens élastiques (9) sont constitués par un ressort taré.

3. Distributeur selon la revendication précédente, *caractérisé* en ce que la surface supérieure normalement plane dudit corps de soupape (8) sert directement de siège au clapet de décharge (6).

4. Distributeur commandé selon la revendication précédente, *caractérisé* en ce que le clapet de décharge (6) incorporé au corps de soupape (8) est un diaphragme (13) en forme d'assiette sollicité en appui positif contre la surface supérieure dudit corps de soupape (8) par le biais d'au moins un ressort taré (9).

5. Distributeur commandé selon la revendication précédente, *caractérisé* en ce que la détermination du tarage du clapet de décharge (6) est réalisée par la surface du diaphragme (13) en combinaison avec la force développée par le ressort taré 9.

6. Distributeur commandé selon la revendication précédente, *caractérisé* en ce qu'un second ressort (17), en appui sur un épaulement (18) du plongeur (10) et concentrique du ressort taré (9), sollicite le diaphragme (13) en forme d'assiette à sa périphérie.

7. Distributeur commandé selon l'une quelconque des revendications 5 ou 6, *caractérisé* en ce qu'un palonnier (15, 16) est inséré entre la base du ressort taré (9) et le diaphragme (13) pour assurer une poussée centrée dudit ressort taré (9) sur ledit diaphragme (13).

8. Distributeur commandé selon la revendication précédente, *caractérisé* en ce qu'une bille calibrée (15) est agencée entre la base du ressort taré (9) et la surface supérieure du diaphragme (13) formant clapet de décharge (6).

9. Distributeur commandé selon la revendication 7, *caractérisé* en ce qu'un palonnier (16) de forme extérieure sensiblement cylindro-conique avec sa pointe reposant au centre du diaphragme (13) est agencé entre ledit diaphragme (13) et, d'une part, la base du ressort taré (9) et, d'autre part, la base du ressort externe (17).

## Patentansprüche

1. Gesteuertes 2/2-Wegeventil, wie beispielsweise ein Magnetventil (4), wobei das Wegeventil im wesentlichen von einem beweglichen Organ (8,10) gebildet wird, mit einem Plunger (10) und einem Ventilkörper (8), der durch elastische Mittel (9) gegen einen ortsfesten Sitz (7) gedrückt wird, und parallel mit einem Kreis vom Bypasstyp, der mittels einer den Ventilkörper (8) durchsetzenden und in unmittelbarer Verbindung mit der Öffnung des Sitzes (7) des Wegeventils stehenden Bohrung (14) sowie einer Ausflußventilklappe (6) verwirklicht ist, welche so kalibriert ist, daß sie sich bei einem Druck öffnet, der kleiner ist als einerseits der Öffnungsdruck des Wegeventils (4) und andererseits der Öffnungsdruck eines Unterbrechungssystems einer vom Wegeventil gespeisten Brenner- oder Einspritzdüse, dadurch gekennzeichnet, daß dieselben elastischen Mittel (9) verwendet werden, um einerseits das Wegeventil in der normalen Verschlußposition und andererseits die Ausflußventilklappe (6) auszutarieren, die in das bewegliche Organ (8, 10) eingebaut ist, welches im wesentlichen einen im Inneren einer Führungsstange oder eines Plungers (10) angeordneten Ventilkörper (8) aufweist.

2. Wegeventil nach dem vorangehenden Anspruch, dadurch gekennzeichnet, daß die elastischen Mittel (9) von einer austarierten Feder gebildet werden.

3. Wegeventil nach dem vorangehenden Anspruch, dadurch gekennzeichnet, daß die normalerweise ebene Oberseite des Ventilkörpers (8) unmittelbar als Sitz für die Ausflußventilklappe (6) dient.

4. Gesteuertes Wegeventil nach dem vorangehenden Anspruch, dadurch gekennzeichnet, daß die im Ventilkörper (8) eingebaute Ausflußventilklappe (6) eine tellerförmige Membran (13) ist, welche durch die Vorspannung mindestens einer austarierten Feder (9) in bestimmter Abstützung gegen die Oberseite des Ventilkörpers (8) gedrückt wird.

5. Gesteuertes Wegeventil nach dem vorangehenden Anspruch, dadurch gekennzeichnet, daß die Festlegung der Austarierung der Ausflußventilklappe (6) durch die Oberfläche der Membran (13) in Kombination mit der von der austarierten Feder (9) entwickelten Kraft bewirkt wird.

6. Gesteuertes Wegeventil nach dem vorangehenden Anspruch, dadurch gekennzeichnet, daß eine auf einer Schulter (18) des Plungers (10) abgestützte und zur austarierten Feder (9) konzentrische zweite Feder (17) die tellerförmige Membran (13) an ihrem Rand beaufschlagt.

7. Gesteuertes Wegeventil nach einem beliebigen der Ansprüche 5 oder 6, dadurch gekennzeichnet, daß ein Hebel (15, 16) zwischen den Fuß der austarierten Feder (9) und die Membran (13) eingesetzt ist, um einen zentrierten Druck der austarierten Feder (9) auf die Membran (13) sicherzustellen.

8. Gesteuertes Wegeventil nach dem vorangehenden Anspruch, dadurch gekennzeichnet, daß eine kalibrierte Kugel (15) zwischen dem Fuß der austarierten Feder (9) und der Oberseite der die Ausflußventilklappe (6) bildenden Membran (13) angeordnet ist.

9. Gesteuertes Wegeventil nach Anspruch 7, dadurch gekennzeichnet, daß ein Hebel (16) mit einer im wesentlichen zylindrisch-konischen äußeren Form mit seiner Spitze auf der Mitte der Membran (13) ruhend zwischen der Membran (13) und einerseits dem Fuß der austarierten Feder (8) und andererseits dem Fuß der äußeren Feder (17) angeordnet ist.

## Claims

1. Controlled distributor with two positions and two orifices, such as an electrically operated valve (4), the said distributor consisting essentially of a moving element (8, 10) comprising a plunger (10) and a valve body (8) pushed by elastic means (9) against a fixed valve seat (7) and comprising, in parallel, a by-pass circuit formed by a hole (14) passing through the valve body (8) which communicates directly with the orifice of the distributor's valve seat (7) and by a discharge flap-valve (6), which is set to open at a pressure on the one hand lower than the opening pressure of the distributor (4), and on the other hand than the opening pressure of a cut-off system for an atomization nozzle (1) fed by the distributor, **characterized in that** the same elastic means (9) are used to control on the one hand the distributor in its normal closed position, and on the other hand the discharge flap-valve (6) incorporated in the moving element (8, 10) consisting essentially of a valve body (8) positioned inside a guide-rod or plunger (10).

2. Distributor according to the preceding Claim, **characterized in that** the elastic means (9) consist of a calibrated spring.

3. Distributor according to the preceding Claim, **characterized in that** the top surface of the said valve body (8), which is normally flat, serves directly as the valve seat for the discharge flap-valve (6).

4. Controlled distributor according to the preceding Claim, **Characterized in that** the discharge flap-valve (6) incorporated in the valve body (8) is a plate-shaped diaphragm (13) which is held with positive pressure against the top surface of the said valve body (8) by the action of at least one calibrated spring (9).

5. Controlled distributor according to the preceding Claim, **characterized in that** the control of the discharge flap-valve (6) is determined by the surface of a diaphragm (13) in combination with the force exerted by the calibrated spring (9).

6. Controlled distributor according to the preceding Claim, **characterized in that** a second spring (17), which rests against a shoulder (18) of the plunger (10) and is concentric with the calibrated spring (9), acts upon the plate-shaped diaphragm (13) at its periphery.

7. Controlled distributor according to either of Claims 5 or 6, **characterized in that** a centering piece (15, 16) is inserted between the bottom of the calibrated spring (9) and the diaphragm (13) to ensure that the thrust of the said calibrated spring (9) against the said diaphragm (13) is central.

8. Controlled distributor according to the preceding Claim, **characterized in that** a ball (15) of appropriate size is positioned between the bottom of the calibrated spring (9) and the upper surface of the diaphragm (13) forming the discharge flap-valve (6).

9. Controlled distributor according to Claim 7, **characterized in that** a centering piece (16) whose external shape is cylindrical and conical with its point resting against the middle of the diaphragm (13), is positioned between the said diaphragm (13) and, on the one hand, the bottom of the calibrated spring (9), and on the other hand, the bottom of the outer spring (17).
